# EUROPEAN PATENT APPLICATION

(11) **EP 1 619 732 A1**
(43) Date of publication of application: **25.01.2006**
(21) Application number: 05016126.4
(22) Date of filing: 25.07.2005
(51) Int. Cl.: H01M 4/32, H01M 4/52, H01M 10/34

(54) **Nickel electrode and alkali storage battery using the same**

(30) Priority: 23.07.2004 JP 2004216389
(71) Applicant: M&G Eco Battery Institute Co. Ltd., Osaka-shi, Osaka-fu 536-0021 (JP)
(72) Inventor: Matsumoto, Isao, Joto-ku Osaka-shi Osaka-fu 536-0021 (JP); Kawano, Hiroshi, Joto-ku Osaka-shi Osaka-fu 536-0021 (JP); Hiroshima, Yoshimitsu, Joto-ku Osaka-shi Osaka-fu 536-0021 (JP)
(74) Representative: Reinhard - Skuhra - Weise & Partner

(57) **Abstract**

An alkali storage battery using power generation elements composed of a positive electrode comprising nickel (Ni) oxide as main materials, a negative electrode, a separator and an alkali aqueous solution, wherein materials of said positive electrodes are spherical or elliptic powders 19 whose tapping density is not less than 2.2 g /cc mainly composed of nickel hydroxide (Ni(OH)₂), powders 19 comprise core powders 16 with innumerable microscopic concaves and convexes on surfaces mainly conposed of spherical or elliptic β-type Ni(OH)₂, and fine powders 22 composed of metal cobalt (Co) and /or Co oxide, and fine powders 22 are crushed and pressed in substantially all concave portions of microscopic concaves and convexes of said core powders, thereby integrated with core powders 16, and surface layers of powders 19 are coated with fine powders 22 and are fluttered, and core powders 16 and / or fine powders 22 have innumerable micro pores 18 which penetrete from surfaces to inner portions.

## Description

### BACKGROUND OF THE INVENTION

### Field of the Invention

The present invention relates to improvement in the performance of alkali storage batteries by specifically improving pasted type positive electrodes, that is, the present invention relates to improvement in properties such as energy density, high reliability, and high discharging rate, and the like.

### Prior Art

Currently, use purposes for small secondary batteries have been roughly divided into a battery for consumers that mainly requires high capacity density and a battery for power applications that needs high discharging rate (high power property); both remarkably expand their markets. Consumer applications primarily involve compact electronic equipment and partly involve power tools and other devices that require high discharging rate as well. Power applications include power sources for hybrid electric vehicles (HEVs), and power source batteries of electric assisted bicycles and the like.

As consumer applications, in particular, for used power sources for general compact electronic equipments, counteracting expansion of Li ion batteries, alkali storage batteries that have much higher capacity density than conventional batteries are desired. Further, among consumer applications, for applications requiring power or power elements in which rapid expansion of the marker thereof is expected, alkali storage batteries have come to be mainstream since they are most excellent in said characters and also they are low in cost. Characteristics of pcsitive electrodes are specifically important in that pcsitive electrodes generally employ composition methods for restricting battery capacities although generally, power generation elements including both positive and negative electrodes deeply =elate to said characters.

The mainstream of positive electrodes represented by Ni/Cd batteries or Ni/MH batteries is a nickel positive electrode in which Ni oxide is used as an active material.

Conventionally, sintered type electrodes have been used as these positive electrodes, however, sintered type electrodes had to overcome problems of providing improved energy density and light weighted electrodes. Therefore, many institutes have been researching on pasted type electrodes which can improve these problems and results of intensive sludies obtained by the inventors of the present invention have now be applied for alkali storage batteries as foam nickel positive electrodes which is one kind of paste type batteries (reference is made, for example, to US Patent No.4251603, hereinafter called Patent document 1 and T. Keily and B. W. Baxter, Power Sources 12, 203-220 pages, International Power Source Symposium , published in 1988, hereinafter called Non-patent document 1). Hereinafter, for more specific explanation on pasted type electrodes and batteries using the same, Ni/MH batteries and pasted nickel positive electredes thereof are taken as one example for explanation.

Conventionally, paste type nickel positive electrodes have been using powders of nickel oxides (mainly Ni(OH)₂) as active materials of positive electrodes, hcwever, these materials are poor in binding property and also poor in electron conductivity. For this reason, for pastes for the formation of positive electrodes, such pastes have been used in which binders are included in addition to nickel oxide powders, and further, such additives as cobalt hydroxide or zinc oxide are included in order to improve utility rate of active materials. Further, in addition to this, for the improvement of shedding prevention and collection performance, a three-dimensional net-like matrix needs to be used (reference is made, for example, Patent document 1 and Non-patent document 1).

In such development history, requirement for recent high capacity batteries have been strong and the requirement has been focusing on making energy density of nickel oxide high in positive electrode materials which restrict capacities of this battery system, that is, making energy density of nickel oxide high in paste type Ni positive electrodes. And at the same time, improvement in high-temperature charging performance of positive materials which is essential to power applications has been desired.

For the purpose of the former, as disclosed by inventors of the present invention (for example, Non-patent document 1), it is clear that the presence of cobalt around active materials (mainly Ni(OH)₂) increases utility rate, and new proposals of coating with Co (OH)₂ is made. Further, advancing this technique, as disclosed in Japan Unexamined publication H8-148146, hereinafter called Patent document 2 and Japan Unexamined publication H9-073900, hereinafter called Patent document 3, ether proposals are made for further stable utility rate by converting into α-type or γ-type cobalt hydroxide (CoOOH) with disordered crystal i.e. expanded space of crystal phase by conducting oxidaticn treatment with high temperature under alkali atmosphere, while infusing air in Co (OH)₃ which is coated. However, high energy density is still not satisfactory when seeing positive electrodes as a whole.

In addition, improvement in the latter mentioned high temperature-charging performance has been the important problem of nickel positive electrodes to be solved from the past. In other words, even when electrodes with improved utility rate by said means is improved, charging performances are have not been satisfactory at high temperature within temperature range usually used for consumer applications. In order to improve high-temperature charging performance, such paste type Ni positive electrodes have been used which employ active Ni (OH)₂ powders as active materials in which Cd, Zn, Co, and the like are added to paste additives or are contained as solid-solution. However, for power applications in which high discharging rate is repeated, electrode temperature further increases, thereby leaving an unsolved problem of incapable of charging.

This is caused by the fact that the energy from a battery charger is consumed by oxygen evolution since regarding charging potential of nickel oxide (Ni(OH) ₂ → NiOOH), a positive electrode gets close to oxygen evolution potential (for example, see Non-patent documents 1 and T.Keily and B. W. Baxter, Power Sources 12, 393-409 pages, International Power Source Symposium, published in 1988, hereinafter called Non-patent document 2) . Thus materials which inhibit oxygen evolution by improving oxygen generating overvoltage have been researched and after that, in many cases, powders of Ca oxides or Y oxides are added to said paste. However, in high temperature for power application (60°C), satisfactory improvement has not been made.

Therefore, some proposals have been made which include methods of solid-solving elements effective for improving oxygen generating overvoltage such as Y, Ca, stibium (Sb) in surface layers of Ni (OH)₂ or coating layers of Co (OH)₂ or adding these elements in powdery states to pastes as compounds as disclosed in Japan Unexamined publication H5-028992, hereinafter called Patent document 4, and fairly greet progress in the improvement of high-temperature charging performance has been observed, however, still, comprehensive countermeasures including improvement in utility rates have not been enough.

In any way, Ni electrodes are required to have high energy density as prerequisite in which utility rate of active materials is improved in a temperature range for at least consumer applications. In other words, improvement in high-tempereture charging performance is an important problem to be solved as improvement in utility rate of active materials in high-temperature atmosphere, or in a wide temperature range in positive electrodes with high energy density.

In order to make Ni positive electrodes have high energy density as prerequisite, it is important that utility rate of Ni oxide which is an active material is improved and that powders thereof can be filled in high density. Methods of coating Co oxide with disordered crystal on a surface of Ni oxide proposed next to the proposals of adding Co or Co oxide to pastes have improved utility rate of active materials at least in a temperature range for consumer applications.

However, as for the former, there remains a problem of unstable utility rate of active materials since it is difficult to place additives evenly in a place where electrode reaction is made. Further, many additives placed in non-required places inhibit improved filling density of active material powders. There remains another problem in view of cost performance since materials are expensive.

Even with material sof the latter overcoming these problems, there still remains a problem of low tapping density of powders as a whole since coating needs to be relatively thickly and evenly with α- type or γ-type materials with expanded space of crystal phase in 6 wt.% to Ni oxide. So be specific, the tapping density is 1.9 to 2.1 g/cc, which is quite low, and satisfactory filling density cannot be obtained even applying pressure. In other words, despite improved utility rate, there is a problem that energy density cannot be greatly improved as an electrode as a whole. Further, sone parts of coating layers are stripped off in a kneading process or a pressing process in a producing process of electrodes, which makes obtaining desired high utility rate impossible.

In addition, for improving charging performance under high temperature (about 60 °C) although improving oxygen evolution is to some extent effective using above mentioned materials, such a method of adding powdery materials in pastes is not very effective though, for the sane reason as above due to the presence other than in active material surfaces on which oxygen evolution occurs, which lowers filling density of active materials. In addition, forming solid-solution in surface layers of Ni oxide powders and in Co oxide coating layers solve this problem, however, inmany cases, this layers inhibit the electrode reactions, which is likely to inhibit the improvement in active materials utility rate which is essential to the purpose of the invention.

Further, regarding coating of Co oxide, which is one of the effective means for any purposes mentioned above, just coating is not enough since it causes crack on coating layers due to swelling of Ni oxide powders by repeated charge and discharge and it lowers cycle life together with lowering of conductivity between powders.

### SUMMARY OF THE INVENTION

As a result of intensive studies, by employing the present invention mentioned below, the present inventors have achieved to make alkali storage batteries with high performance, Lo be specific, to make alkali storage batteries with high energy density far exceeding that of conventional batteries and with stability, and they have found the improvement in performances such as high reliability and high discharging rate, thereby completing the invention.

A first invention of the present invention relates to an alkali storage battery composed of a positive electrode comprising nickel (Ni) oxide as main materials, a negative electrode, a separator and an alkali aqueous solution, wherein
(1) powders of Ni oxide used as active materials of said positive electrodes include co=e powders whose main materials are spherical or elliptic β-type Ni (OH)₂ with innumerable microscopic concaves and convexes on surfaces and fine powders of metal cobalt and/or Co oxide, and said fine poviders arc crushed and pressed in substantially all concave portions of microscopic concaves and convexes of said core powders, thereby integrated with core powders, and surface layers of said powders are coated with said fine powders and are flattened,
(2) tapping density of spherical or elliptic powders is nct less than 2.2 g /cc,
(3) a specific surface area of said core powders and/or said fine powders is not less than 7 m²/ g by having innumerable micro pores which penetrate from surfaces to inner portions.
   In addition, a second invention of the present invention Relates to an alkali storage battery wherein
(4) core powders mainly composed of the above mentioned spherical or elliptic type-β Ni (OH)₃ can be the ones with innumerable concaves and convexes on a surface and they can include not less than 30 wt. % of powders with layers of Co oxide arranged on surface thereof,
(5) said core powders include at least one or more elements selected from the group consisting of the elements of Co, Zn, Mn, Ag, Mg, and Al,
(6) in said layers of Co oxide and/or said metal cobalt and/or fine powders of Co oxide selected from the group consisting of the elements of Ti, Y, Zn, Cd, Ca, Pb, Fe, Cr, Ag, Mo and Ln (here, Ln is a mixture of one more elements classified as lanthanoid), at least one or more elements or said oxides are solid-solved or mixed. In the second invention the first invention is further developed.

Further, the third invention of the present invention relates to an alkali storage battery composed of a positive electrode comprising nickel (Ni) oxide as main materials, a negative electrode, a separator and an alkali aqueous solution, wherein
(a) average thickness of said positive electrodes is within the range of 200 to 500 µm,
(b) average thickness of said negative electrodes is within the range of 100 to 300 *µ*m,
(c) said separator is a non-woven fabric having an average thickness of 50 to 110 that composed of a hydrophilic polyolefin synthetic fiber,
(d) said alkali aqueous solution is mainly composed of potassium hydroxide (KOH) and includes sodium hydroxide (NaOH) and/or lithium hydroxide (LiOH).

The third invention relates to an alkali storage batteries suitable for power applications using the first and second inventions.

By using alkali storage batteries of the present invention, in the wide temperature range of atmosphere required for both consumer applications and power applications, batteries with high performance far exceeding the conventional batteries in such characteristics as high energy density and the like can be obtained. In particular, by forming thin layers in which fine powders of Co and/or Co oxide with excellent electronic conductivity and core powders mainly composed of Ni oxide powders are integrated firmly and by improving tapping density in positive electrodes which greatly affect performances of batteries, energy density and cycle life of alkali storage batteries are greatly improved. In addition, the use of these Ni positive electrodes no longer require additives such as Co and the like to pastes unlike conventional electrodes which used to require such additives, which further enhances the above effect.

Further, at the time of charging under high temperature as well, charging efficiency can be improved and battery capacities canbe improved since evolution of oxygen is inhibited. In particular, when Ni powders and/or Li ion are contained in the layers of said cobalt oxide formed on a surface of said nickel oxide, conversion from Co(OH)₂ to CoOOH can easily be made and therefore, charge and discharge characteristics at a high temperature can be improved from the initial cycles of charge and discharge. Among them, Li ion and Na ion can easily be replaced with H ion, thereby enhancing ion conductivity and improving charge and discharge characteristics.

Further, by increasing the number of micropores of Ni (OH)₂ powders coated with Co or Co oxide and by making specific surface not less than 7m²/g (conventionally, 5~6 m²/g), particle crack is less likely to occur even with the increase of NiOOH volume which is a charge product, thereby improving cycle life.

In addition, since alkali storage batteries of the present invention are good in flexibility even when electrode groups are composed spirally rolled since positive and negative electrodes are prepared as thin films with specific thickness, thin separators with average thickness of 50 to 110 µm (conventionally, 120 tc 170 *µ*m) can be used. In other words, in processing into spirally rolled shapes, since crack is less likely to occur in electrodes, even when thin separators are used, short circuit does not occur and with the application of thin separators, high capacity can be maintained and high power can be achieved.

### BRIEF DESCRIPTION OF THE DRAWINGS

Fig. 1 is a sectional, schematic diagram of a spherical active material relating to an embodiment of the present invention;
FIG. 2 is a sectional, schematic diagram of nickel positive electrode taken along the line A-A of FIG. 3 relating to an embodiment of the present invention;
FIG. 3 is the entire diagram of a nickel positive electrode relating to an embodiment of the present invention;
FIG. 4A is a partial, enlarged, top view of an electro conductive electrode substrate relating to an embodiment of the present invention;
FIG. 4B is a partial, enlarged, sectional view in the section taken along the line E-E of FIG. 4A;
FIG. 4C is a partial, enlarged, sectional view in the section taken along the line F-F of FIG. 4A;
FIG. 5 shows a sealed cylindrical Ni/MH battery (AA size) relating to an embodiment of the present invention;
FIG. 6 is a side view indicating press working process of a nickel positive electrode relating to an embodiment of the present invention;
FIG. 7 is a drawing indicating charging and discharging property in alkali storage batteries of Examples 1 to 6 and Comparative Examples 1 and 2; and
FIG. 8 is a drawing indicating discharging property in alkali storage batteries of Examples 7 to 10 and Comparative Examples 1 and 2.

### PREFERRED EMBODIMENT IN CARRYING OUT THE INVENTION

### (First invention)

The present invention relates to an alkali storage battery composed of a positive electrode comprising nickel (Ni) oxide as main materials, a negative electrode, a separator and an alkali aqueous solution, wherein
(1) powders of Ni oxide used as active materials of said positive electrodes comprises core powders having innumerable microscopic concaves and convexes on surfaces mainly composed of spherical type-β Ni (OH)₂ and fine powders of metal cobalt (Cc) and/or Co oxide and said fine powders are crushed and pressed in substantially all concave portions of microscopic concaves and convexes of said core powders, thereby integrated with core powders and surface layers of said powders are coated with said fine powders and are flattened
(2) tapping density is not less than 2.2 g /cc, and
(3) a specific surface of powders is not less than 7m²/g since said core powders and/or said fine powders have innumerable micro pores which penetrate from surfaces to inner portions.

### (Second invention)

The present invention is the one where the first invention is further developed, wherein
(4) core powders mainly composed of said spherical β type Ni(OH)₂ are materials with innumerable microscopic concaves and convexes on a surface even when not less than 30% cf powders with layers of Co oxides arranged on a surface are nixed,
(5) said core powders comprise at least one element selected from the elements of Co, Zn, Mn, Ag, Mg, and Al in a solid-solution, and
(6) at least one element or oxide thereof selected from the elements cf Ti, Y, Zn, Cd, Ca, Pb, Cr, Fe, Ag and Ln (wherein, Ln is an element of the group lantanides, or is a mixture thereof) is solid-solved or mixed in layers of said Co oxide and/or fine powders of said metal cobalt (Co) and/or Co oxide.

Active material powders of the positive electrodes in the present invention form powder structures provided with thin film layers by further pressing fine powders of Co and/or Co oxide in double-layered powders in which layers of Co oxide (mainly CoOOH) are formed on surfaces of nickel oxide (Ni(OH)₂) with innumerable microscopic concaves and convexes or mixtures of these powders and single powders of nickel oxide (Ni(OH)₂).

In active material particles of the positive electrode of the present invention, although the shapes are not specifically limited, spherical or elliptic shapes are preferable since such shapes allow high density filling and are easy to obtain as continuation of growth of nickel hydroxide crystals on surfaces. In addition, in said active materials, it is preferable that nickel oxide (Ni (OH)₂) and cobalt oxide (CoOOH) have innumerable micropores (which correspond to increase in a surface area) for absorbing deformation of swelling and contraction of active materials generated by repeated charge and discharge, thereby inhibiting cracks in particles.

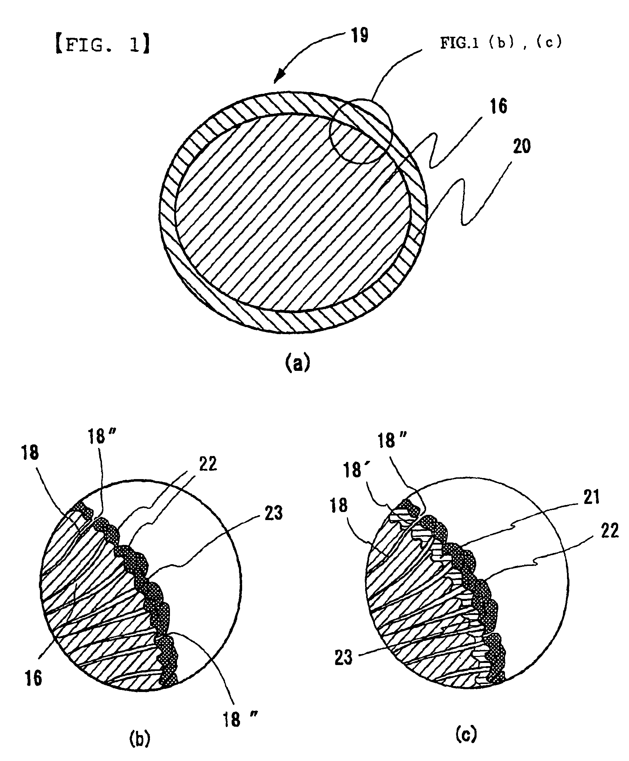

Fig.1 is a sectional diagram of said active material in which said active material particles have innumerable micropores. Fig.1 (a) is a sectional diagram of said active material particles as a whole, and Fig. 1 (b) and Fig.1 (c) are partial enlarged sectional diagrams. Active material particles 19 are provided with core powders 16 of nickel oxide (Ni (OH)₂) coated with layers 20 of fine powders 22. In the vicinity of surfaces of active material particles 19, fine powders 22 of Co, Co (OH)₂, and CoOOH alone or in mixture form thin layers on surfaces pressed in microscopic concaves and convexes 23 in core powders 16. Surface average diameter has micropores 18 of not greater than about 1 *µ*m. Although micropores 18 (18', 18") extend inside of core powders 16, inwardly extending length is not specifically limited as long as said micropores penetrate layers of fine powders 22 and reach core powders 16 of nickel oxide (Ni (OH)₂),

Positive electrodes in the present invention are positive electrodes composed of nickel (Ni) oxide as main materials, wherein said nickel oxide is composed of core powders which are either powders alone whose main materials are spherical or elliptic type-β Ni(OH)₂, or mixture of said powders and powders provided with layers in which Co oxide is coated on said powder surfaces in crystals and thin film layers in which fine powders of metal cobalt (Co) and/or Co oxide are pressed therein. In addition, powders whose main materials are type-β Ni(OH)₂ include at least one element selected from the elements designated by the symbols of Co, Zn, Mn, Ag, Mg, and Al in a solid-solution state. Further, in layers of said cobalt oxide and/or said thin film layers, at least one element selected form the elements designated by the symbols of Ti, Y, Zn, Cd, Ca, Pb, Cr, Fe, Ag and Ln (wherein, Ln is an element of the group lantanides, or is a mixture thereof) is solid-solved or oxides thereof are mixed. Further, a specific surface of Ni oxide as a whole coated with said thin film layers is not less than 7m²/g.

In positive electrodes used for alkali storage batteries of the present invention, nickel oxides are not specifically limited so long as they are included as main materials which generate battery reaction. In order for said nickel oxides (Ni(OH)₂)to be used as paste type electrodes with long life suitable for high capacity and for high power applications, powdery additives such as conductive agents and the like and active material particles are preferably integrated for easy filling and coating. In positive electrodes of the present invention, it is preferable that the content ratio of cobalt oxide layers in said core powders is 2 to 4 wt. %, which is less than conventional 4 to 8 wt.%, and that the content ratio of thin film layers in which fine powders of Co and/or Co oxide is/are pressed in said core powders is 1 to 3 wt.% from the viewpoint of maintenance of electronic conductivity and cost performance.

The elements designated by the symbols of Co, Zn, Mg, Mn, Ag, and Al LhaL may be contained in the nickel oxide in a solid solution state are not specifically limited as long as one or more elements are selected from the group of the elements thereof. The inclusion of these elements enables an alkaline storage battery using a positive electrode containing the aforementioned nickel oxide to be of higher capacity. The elements selected from the above-mentioned group may be selected as an element, cr a plurality of elements, and in particular Mn is effective in high-order reaction fcr higher capacity; remaining Ag, Mg and other elements are effective in high power and thus are more preferable. The total solid solution amount of the elements designated by the symbols of Co, Zn, Mn, Ag, Mg, and Al in the a forementioned nickel oxide is preferably from 3 to 15% by weight based on the amount in terms of metal Ni. When the total amount of the above solid solution is less than 3% by weight based on the amount in terms of metal Ni, it is difficult on a production basis to render the above-mentioned element to uniformly melt in each active material particle in the form of solid solution, and so the total solid solution amount is preferably from 3 to 15% by weight based on the amount in terms of metal Ni. When the total amount of the above solid solution is more than 15% by weight, elements of the solid solution are separated, or the ratio of Ni oxide, the essential reaction material, is too low, which on the contrary leads to a decrease in capacity. When the total amount is within this range, specifically the solid battery reaction of Mn or another element is allowed to be brought from 1e⁻ reaction to 1.5 e⁻ reaction, thereby enables still higher capacity; at this time a decrease in the voltage can be suppressed by combination of other materials.

The elements designated by the symbols cf Ti , Y, Zn, Cd, Ca, Pb, Cr, Fe, Ag and Ln that may be contained in the aforementioned cobalt oxide layers and/or said thin film layers in solid solution state and/or in mixed state are not specifically limited as long as one or more clcments are selected from the group of the elements thereof. The inclusion of these elements enables an alkaline storage battery using a positive electrode containing above nickel oxide to restrain the evolution of oxygen from the surface of the cobalt oxide layer, leading to being capable of improving charging efficiency at a high temperature. The total solid solution amount of the elements designated by the symbols of Ti, Y, Zn, Cd, Ca, Pb, Cr, Fe, Ag and Ln in the aforementioned cobalt oxide is preferably from 3 to 15% by weight based on the amount in terms of metal Co. When the total amount of the above solid solution is less than 3% by weight based on the amount in terms of metal Co, uniform solid solution cannot be made in the entire Co oxide layer, which decreases an improvement in charging efficiency caused by the enhancement of the aforementioned oxygen evolution over voltage; when the total amount is more than 15% by weight based on the amount in terms of metal Co, the above solid solution elements mostly deposit singly, resulting in a decrease in electric conductivity of intrinsic Co oxide.

Where the above-mentioned cobalt oxide has innumerable micropores, Ni and/or Li may be contained in micropores and the like within the cobalt oxide layer forming the solid solution in the above positive electrode. The inclusion of Ni and/or Li in the above-mentioned cobalt oxide layer allows an alkaline storage battery of the present invention to improve the electric conductivity in the positive electrode, further suppress the evolution of oxygen at a high temperature also, and further enhance the charging efficiency at a high temperature. The amount of Ni and/or Li and/or Na contained in micropores and the like in a cobalt oxide layer formed in the form of solid solution is not specifically limited, but the amount is preferably from 0.5 to 1% by weight based on the amount in terms of metal Co of cobalt oxide. When the content of Ni and/or Li is below 0.5% by weight, the above-described addition efficacy is decreased because of the uneven distribution; if the content is more than 1% by weight, the electric conductivity of Co oxide is decreased on the contrary. The above Ni and/or the above Li may be present in the Co oxide layer in a mixture form as nickel powder when the cobalt oxide is formed on the nickel oxide. The Li is added Lo the above-described nickel oxide coated with cobalt oxide by spraying LiOH solution at a high temperature, and therefore the Li may enter the cobalt layer. In addition, the aboveNi powder is general purpose Ni powder itself or slightly grinded Ni powdered material, and the Li includes Li ions contained in the interlayer within the crystal of the CoOOH layer and the Li oxide separated out within the micropores. The same can be applied for Na as well.

Particle diameters of active material powders which are main materials of positive electrodes in an alkali storage batteries of the present invention are not specifically limited, but the average particle diameter is preferably from 10 to 20 µm in order to highly keep the packing density as an electrode and to obtain a necessary reaction area even during high discharging rate.

When active material powders, which are main materials of a positive electrode in an alkaline storage battery of the present invention, a positive electrode is formed by filling or coating on an electrode substrate a paste containing an active material powder, a binding agent and a thickening agent, and no additives are required for improving utility rate.
The aforementioned paste can utilize a well known paste-like composition as long as the paste is a paste-like composition prepared by dispersing the aforementioned active material powder and a binding agent in liquid using water as primary solvent. Also, the aforementioned binding agent can use fine powders such as PTFE, PEO and polyolefins and well known binding agents such as polyvinyl alcohol. The aforementioned thickening agent can use CMC, MC (methyl cellulose), and the like. The aforementioned paste may contain Zi powder, Co powder, Ni powder, Zn oxides, and the like in addition to the above-described active material powder and binding agents.

The aforementioned electrode substrate can use a substrate, used in a well known pasted type electrode, such as a porous metal fiber or a foam metal porous body, and in particular the fact that the substrate is a substrate three-dimensionally fabricated (hereinafter abbreviated as 3DF substrates) such that metal foils have innumerable concaves and convexes is preferable because the substrate is present within the entire electrode, has a small amount of use of the substrate, has high utilization of active material, and provides higher capacity. The substrate three-dimensionally fabricated so as to have innumerable concaves and convexes is not specifically limited, but it is preferable that the substrate is an electrode substrate which is hollow, has innumerable concaves and convexes, and is a thin film-like, electric conductive and electrolyte resistible metal thin plate having almost the same thickness as that of the electrode, the thin plate being three-dimensionally fabricated by the concaves and convexes, and wherein the concaves and convexes are close to each other.

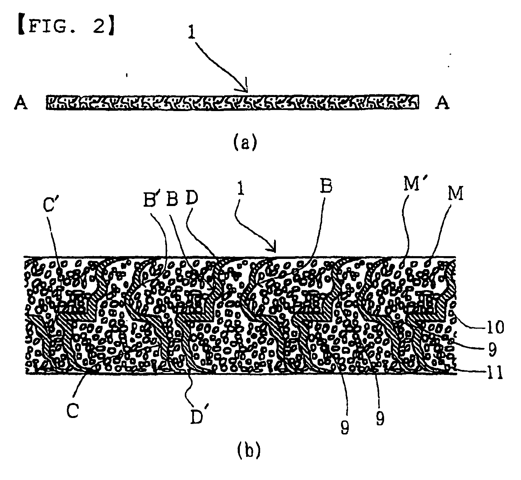

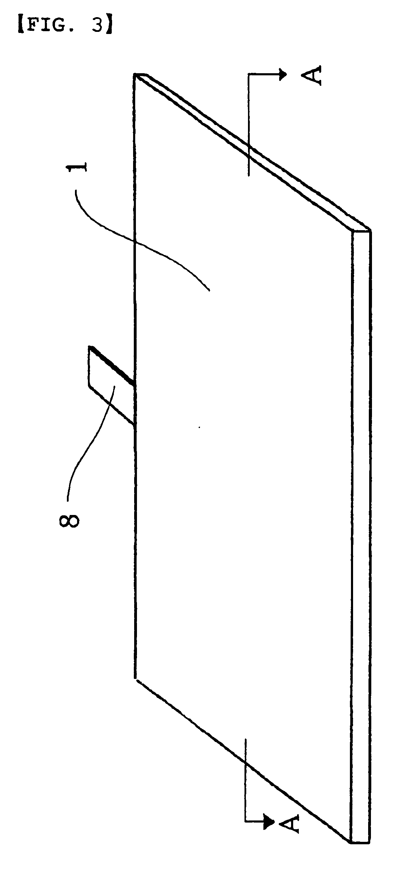

FIG. 2 is a sectional view taken along the line A-A in the positive electrode of FIG. 3; the positive electrode is hollow and has innumerable concaves and convexes and uses the aforementioned electrode substrate three-dimensionally fabricated by the concaves and convexes. Reference numeral 9 in the figure is a nickel metal part constituting a three-dimensional nickel electrode substrate, reference numeral 10 is active material powder, primarily containing the nickel oxide (Ni (OH)₂) powder, filled in this electric conductive electrode substrate, and reference numeral 11 is a space part. The walls of convex B and concave C of the three-dimensional substrate made by processing a nickel foil have one directional slope parallel to the electrode surface, having distortion; the tip parts of the walls of convex B and concave C is small in the thickness of nickel and also is still more largely sloped in one direction. This distortion and an inclination of the tip suppress the separation of fillers such as active material powder from the electric conductive electrode substrate. Also, the inclination of the tip part is a mustache so as not to cause a micro short circuit to the opposite electrode, and also has the effect of making shorter the shortest distance from the electric conductive electrode substrate of the nickel substrate to the electric conductive electrode substrate for the furthest active material powder particle (proximity to M in the drawing) than that in the case where the top is not bent (proximity to M'), i.e., the effect of enhancing the electric collection capacity of the entire electrode.

FIG. 3 is the entire view of a nickel positive electrode 1 having structure as in FIG. 2; the electrode is a thin type nickel positive electrode having a thickness of 500 µm or less.

In addition, in the above-described positive electrode plate, 3 DF substrate produced by filling or coating therewith the above-mentioned active material powder together with a binding agent may also three-dimensionally be made using a thin film-like metal plate having electrolyte resistance; the plate is hollow, and has innumerable, fine, concave and convex bridges having open parts on the edge parts.

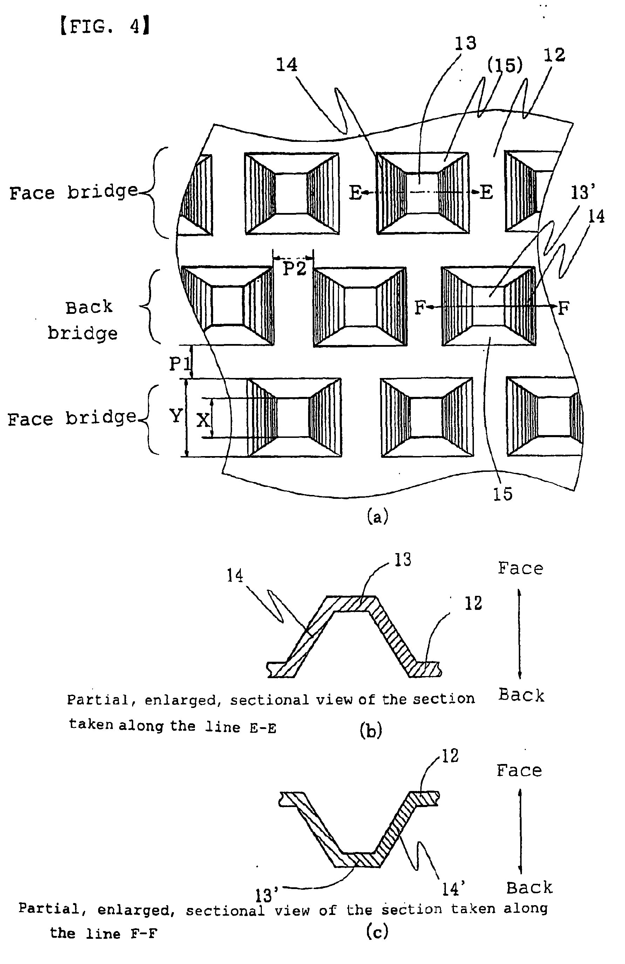

As electrode substrates having innumerable microscopic concave and convex bridges, as shown in FIG.4(a), electrode substrates with thickness of 100 to 500 µm in which nickel foils with thickness of 10 to 40µm are subject to three dimensional treatment with innumerable microscopic concave and convex bridges can be used. As shown in a sectional view taken along lines E-E in FIG.4 (a) represented as FIG.4 (b), face bridges have bridge shapes composed of slope part 12 and upper edge part 11. Further, as shown in FIG. 4 (a), in face bridges, hole part of bridge edge part 15 penetrates vertically under upper edge part 11. Each of face bridges and back bridges may form rows consisting of several of them and said rows may be arranged alternately as shown in FIG.3. In addition, it is preferable that longitudinal direction cf most of the microscopic concave and convex bridges of groups thereof is unidirectional and that said direction is in the length direction of electrodes and width directior of electrodes for filling the amount of activematerial powders evenly, and the like.

In addition, when electrode substrates provided with innumerable microscopic concave and convex bridges represented by face bridges and back bridges are used for nickel positive electrodes, it is preferable that thickness thereof is set to be close to thickness of electrodes, thereby holding active material powders. Therefore, it is preferable that the thickness of the electrode substrate three-dimensionally formed by concave and convex bridges is preferably 50% or more relative to that of the electrode. Hence, with the face and back bridges, X, Y, P1 and P2 in FIG.4 preferably range, respectively, from 50 to 150 µm, from 100 to 250 µm, from 50 to 100 µm, and from 50 to 100 µm. The heights of the face bridge and/or the back bridge are respectively almost the same because of readily doing so by a roller or another means; as a result, the thickness of the substrate is preferably from 150 to 500 µm. The shapes of the face and back bridges can be a substantially trapezoidal and/or substantially semicircular shape with removal of the linear part of the lower edge viewing from the edge direction as in FIGS. 4B and 40, and are preferable because a shape without the linear part of the lower edge can readily be fabricated.

A negative electrode, a separator and alkali aqueous solution, to be used in an alkali storage battery of the present invention, can use well known materials. As the aforementioned negative electrodes, for example, a pasted type electrode that contains as an active material hydrogen absorbing alloy having an AB₅ type alloy or an AB₂ type alloy is used in the case of a Ni/MH alkali storage battery, and the negative electrodes also can be used by appropriately selecting negative electrodes suitable for an alkali storage battery such as a nickel cadmium alkali storage battery, a Ni/MH alkali storage battery, or a nickel zinc alkali storage battery; as a result, a variety of alkali batteries can be obtained.

The aforementioned separator can use a well known separator, and the fact that the separator is a thin type non-woven fabric having an average thickness of 50 to 110 µm that is comprised of a hydrophilic resin fiber can increase the ion passage speed between the positive/negative electrodes and substantially contribute to resulting in higher power. Also, the fact that the separator is a thin film enables still higher power and higher capacity. The above-described separator preferably has a porosity of 40 to 60% by volume from the viewpoints of mechanical strength, short circuit prevention and the like.

In addition, alkali aqueous solution contained in an alkali storage battery of the present invention can utilize well known alkali aqueous solution, and an aqueous solution containing potassiumhydroxide (KOH) as main active ingredient ispreferable on account of small electric resistance. The concentration of the above-described aqueous alkal solution as well as the amount thereat to be used in the above described al kali storage battery are not specifically limited as long as they are well known concentration and amount.

### (Third invention)

The present invention relates to an alkali storage battery using a positive electrode mainly composed of nickel oxide, a negative electrode, a separator, and alkali aqueous solution, wherein
(a) said positive electrode has an average thickness of 200 to 500 µm,
(b) said negative electrode has an average thickness of 100 to 300 µm,
(c) said separator is a non-woven fabric having an average thickness of 50 to 110 µm, comprising a hydrophilic resin fiber, and wherein
(d) the alkali aqueous solution is an aqueous solution primarily composed of potassiumhydroxide (KOH) andalsocompcsed of sodium hydroxide (NaOH) and/or lithium hydroxide (LiOH) the present invention relates to an alkali storage battery suitable for power applications using the first and the second invention.

The above-described alkali storage battery can use a thin type separator having an average thickness of 50 to 110 µm since the positive and negative electrodes are made to be a thinner film to the aforementioned thickness so that the electrode group is flexible even though the group is constructed in a spiral form, and thus the alkali storage battery is allowed to have higher capacity and further have higher power without generating a short circuit . In particular, for Ni/MHbattery applications, the use of a thin type non-woven fabric made of a sulfonated polyolefin as a separator provides high temperature resistance and also suppresses self-discharge, and so is appropriate to power applications and other applications in which the battery comes to have a high temperature.

The above-described positive electrode is not specifically limited as long as the electrode contains as the main material the nickel oxide on the surface of which thin layers in which fine powders of at least Co and/or Co oxide are pressed in said core powders are arranged, for the main material relating to battery reaction. Such active material particles are preferable since they allow filling or coating easily.

As in the second invention, it is preferable that active material powders in said positive electrodes contain in the form of a solid solution state at least one or more elements selected from the group consisting of Co, Zn, Mg, Mn, Ag, and Al and that the cobalt oxide layers and/or thin film layers of said surfaces contain as a solid solution one or more elements selected from the group consisting of the elements designated by the symbols of Ti, Y, Zn, Cd, Ca, Pb, Cr, Fe, Ag and Ln (wherein, Ln is an element of the group lantanides, or is a mixture thereof) preferably suppress the evolution of oxygen (O₂) even at a high temperature during charging, thereby improving the charging efficiency and enhancing the battery capacity.

As in the first and second inventions, when said active material powders are used, a shape thereof is preferably spherical or elliptic and it is preferable that nickel oxide (Ni(OH)₂), cobalt oxide (CoOOH) layers, and said thin film layers in active material particles have innumerable micropores . Also, as in the second invention, the total solid solution amount of the elements designated by the symbols of Co, Zn, Mn, Ag, Mg, and Al in the above nickel oxide is preferably from 3 to 15% by weight based on the amount in terms of the metal Ni; the total solid solution amount of the elements of Ti, Y, Zn, Cd, Ca, Pb, Cr, Fe, Ag and Ln in the aforementioned cobalt oxide is preferably from 3 to 15% by weight based on the amount in terms of the metal Ni.

In addition, when said nickel oxide powders, cobalt oxide on surfaces of nickel oxide powders, and said thin film layers have innumerable micropores, Ni and/or Li and/or Na may be contained in micropores. Inclusion thereof in the above cobalt oxide layer allows an alkali storage battery of the present invention to improve the electric conductivity in the positive electrode, further suppress the evolution of oxygen at a high temperature also, and further improve the charging efficiency at a high temperature. The amount of Ni and/or Li and/or Na contained in the cobalt oxide layer that has been formed in the form of solid solution is not specifically limited, but the amount is preferably from 0.5 to 1% by weight based on the amount in terms of the metal Ni of the nickel oxide.

A positive electrode in an alkali storage battery of the present invention is an electrode having an average thickness of 200 to 300 µm. When the above average thickness is less than 200 µm, an increase in substrate material costs and complication of the production process are generated; when the above average thickness exceeds 500 µm, the resistance value of the whole electrode is increased, and also the electrode is readily cracked during construction of a spiral electrode group so that a thin type separator easily generates a micro short circuit.

A negative electrode in an alkali storage battery of the present invention has hydrogen absorbing alloy as main material. The method of causing the aforementioned negative electrode to contain a hydrogen absorbing alloy is not specifically limited, but a method can do it that involves coating on an electro conductive electrode substrate a well known paste including AB₅ type alloy and AB₂ type alloy powder. The above negative electrode is an electrode having an average thickness of 100 to 300 µm. When the above average thickness is below 100 µm, the volume fraction of substrate increases too much leading to a decrease in packing density of hydrogen absorbing alloy; when the above average thickness exceeds 300 µm, the electric conductivity of the entire electrode decreases.

An alkali storage battery of the present invention is provided with a separator, a non-woven fabric having an average thickness of 50 to 110 µm comprising a hydrophilic resin fiber. The fact that the separator comprises a hydrophilic resin fiber allows the ion passage between positive/negative electrodes to be easy as well allowing both positive and negative electrodes to be a thin type; the thicknesses of the electrodes is about a half that of a general-purpose battery resulting in being flexible; as a result, a short circuit is rarely generated on account of the electrode hardly breaking through the separator even during charging and discharging. The aforementioned separator has an average thickness of 50 to 110 µm. If the average thickness is less than 50 µm, a short circuit is likely to occur, whereby the reliability of the alkali storage battery is decreased. When the above average thickness exceeds 110 µm, the occupancy of the separator in the battery inside volume is increased, leading to a decrease in capacity.

Additionally, as the above separator, the use of a non-woven fabric of a polyurethane resin wilh hydrophilic treatment is preferable on account of increasing the ion passage speed between positive/negative electrodes. The above hydrophilic treatment is not specifically limited, but preferably the aforementioned sulfonation undergoes the addition of a sulfo group tc the proximity of the fiber surface by treatment of SO₃, gas flow for improved hydrophilic property.

An alkali aqueous solution to be used in an alkali storage battery of the present invention may use a well known alkali aqueous solution to be used in an alkali storage battery as long as the solution is an aqueous solution containing potassium hydroxide (KOH) as the main ingredient. The concentration of the potassium hydroxide in the above alkali aqueous solution can be from 28 to 33% by weight. The aforementioned alkali aqueous solution may contain well known additives such as NaOH and LiOH in addition to potassium hydroxide.

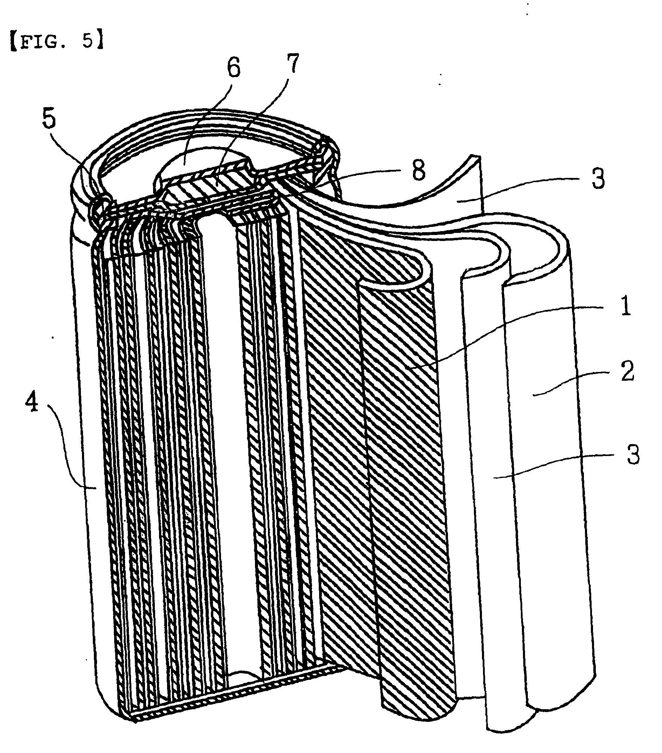

An alkali storage battery of the present invention has generating elements comprising a positive electrode, a negative electrode, a separator and an alkali aqueous solution. For instance, where the aforementioned alkali storage battery is a cylindrical battery of AA size, it can be a battery constitution shown in FTG. 5. A sealed cylindrical nickel/hydrogen battery can be fabricated, as indicated in FIG. 5, by a process that involves inserting into a cylindrical metal case an electrode group obtained by rolling up a nickel positive electrode 1 having an electrode thickness of 500 µm or less and a negative electrode 2 which is thinner than a positive electrode and for which hydrogen absorbing alloy of AB₅ type such as MmNi₅ type is used via a separator 3 of a non-woven fabric of polyolefin-based synthetic resin fiber and then injecting an alkali electrolyte thereinto and sealing.

### EXAMPLE

### (Example 1)

A three-dimensional electric conductive electrode substrate was fabricated that has innumerable fine hollow concaves and convexes obtained by passing a hoop-like nickel foil having a thickness of 30 µm through the space (may be the space between rollers) between molds having conical concaves and convexes and pressurizing. Those closest to the convexes (the concaves) arc all concaves (the convexes); the diameter of the hollow, substantial cone of the concaves (the convexes) is from 60 tc 80 µm in root, with the tip being from 35 to 45 µm ; the latter was made thin in thickness by strongly processing from the tip and bottom sides with two plate molds having concaves and convexes to make most of the tip ends open. The thickness of an electric conductive electrode substrate three-dimensionally made with concaves and convexes was set equal to 500 µm, which was thicker than that of the final electrode by 100 µm. The pitch between the two convex (or the pitch between the two concaves) was set equal to from 350 to 450 µm in both the hoop length direction and the vertical direction thereof. The angle (m) formed between the length direction of the electric conductive electrode substrate and the line of the convexes (concaves) was about 45°. In the above nickel electrode substrate, at the both ends cf the width directions was further placed parts worked with a flat roller; a portion of the parts were used as electrode leads.

As exemplar of the first and the second inventions, active material powders with thin film layers provided by pressing fine powders (about 2wt.% with respect to the total amount) mainly composed of Co (OH)₂ on a surface of core powders that are powders cf 50 wt.% of Ni oxide (Ni (OH)₂) and 50 wt.% of mixed powders in which CoOOII layers (3 wt.%) were arranged were filled in an electrode substrate 9 thus obtained. To be specific, passes of active material powders of spherical powders whose diameter is about 10 µm in which said Ni oxide contains about 2 wt.% (converted to Ni metal) of Co and about 4 wt.% of Zn in a solid solution state were filled. The Ni (OH)₂ powder was prepared by a well known method that uses an NiSO₄ solution, NaOH and ammonia. Regarding preparation of a CoOOH layer, Co (OH)₂ layer was grown in crystal on the surface of the Ni (OH)₂ powder using a CoSO₄ solution by a similar method. Then, therewith was blcndcd NaOH and the resulting material was oxidized to CoOOH by blowing hot air from 100 to 120°C for 1 hour therethrough. Next, 2 wt. % of said mixed powders and Co (CH)₂ fine powders were mixed with a generally used kneading machine in a dried state and under the atmosphere at room temperature, followed by strongly stirring and mixing in a planetary ball mill for 30 minutes, thereby obtaining active material powders in which fine powders are integrated. Paste using this was prepared by admixing 100 parts by weight of the above active material powder with 22 parts by weight of a solution prepared by dissolving about 1% by weight of carboxymethyl cellulose in about 0.1% by weight of polyvinyl alcohol. This active material paste was filled and coated with the nickel electrode substrate 9.

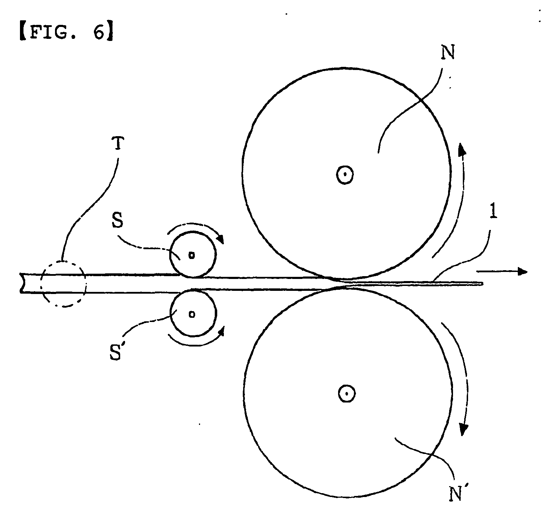

Next, as indicated in FIG. 6, a nickel electrode substrate filled with the obtained active material paste and dried was passed through the space between a pair of rollers indicated in S, S' having a diameter of about 30 mm that was rotating at a relatively high revolution speed, while the resulting substrate surface was scrubbed, it was lightly pressurized at a revolution number of 10 revolutions/second, and then was strongly pressurized between rollers indicated in N, N' having a diameter of about 150 mm at a speed of from 50 to 100 mm/second to yield a thin type nickel positive electrode having a thickness cf 400 µm.

The alkaline storage battery of Example 1, a sealed cylindrical Ni/MH cell having theoretical capacity of a positive electrode of 2300 mAh and the AA size, was fabricated by a procedure that entails cutting the thin type nickel positive electrode into a plate of 44 mm wide and 160 mm long, immersing the resulting plate in suspension of a fluorine resin fine powder having a concentration of about 3% by weight and drying to make a nickel positive electrode, combining the positive electrode with a well known MmNi5-based hydrogen absorbing alloy negative electrode having a thickness of 220 µm, a width of 44 nm and a length of 210 mm, inserting the combination into a batter case of the AA size, and subsequently sealing the opening with a sealing plate 6 serving also as a well known positive terminal in FIG. 5 and a gasket 5. Further, as a separator, a non woven cloth made of a sulfonated polyolefin resin fiber having a thickness of 60 µm was employed and as electrolyte, KOH aqueous solution with about 30 wt % was used.

### (Example 2, Ti or Y solid solution)

The Ni/MH battery of Example 2 was obtained as described in Example 1 with the exception that active material powders with thin film layers provided are used in which fine powders mainly composed of Co (OH) are pressed on surfaces of core powders composed of 50 wt.% of Ni oxide (Ni (OH)₂) and 50 wt.% of mixed powders in which CoOOH layers (3wt.%) are arranged in said Ni oxide. In said active materials, said nickel oxide contains about 2 wt.% (converted to Ni metal) of Co and about 4 wt.% of Zn in a solid-solution state and said CoOOH layers or thin film layers contain about 8 wt.% (converted to Co metal)of Ti or Y in a solid-solution state in said Co oxide layers or contain about 10 wt.% of powders of TiO or Y₂O₃ mixed in said thin film layers, and particle diameters of powder materials are 15 to 20 *µ* m.

### (Example 3, Ca or Cd solid solution)

The Ni/MH battery of example 3 was obtained as described in Example 1 with the exception that active material powders with thin film layers provided are used in which fine powders mainly composed of Co (OH) are pressed on surfaces of core powders composed of 50 wt.% ct Ni oxide (Ni (CH)₂) and 50 wt.% of mixed powders in which CoOOH layers (3wt.%) are arranged in said Ni oxide. In said active materials, said nickel oxide contains about 2 wt.% (converted to Ni metal) of Co and about 4 wt.% of Zn in a solid-solution state and said CoOOH layers or thin film layers contain about 8 wt.% (converted to Co metal) of Ca or Cd in a solid-solution state in said Co oxide layers or contain about 10 wt.% of powders of CaO or Cd0 mixed in said thin film layers, and particle diameters of powder materials are 15 to 20 *µ*m.

### (Example 4, Pb solid solution;

The Ni/MH battery of Example 4 was obtained as described in Example 1 with the exception =hat active material powders with thin film layers provided are used in which fine powders mainly composed of Co (OH)₂ are pressed on surfaces of core powders composed of 50 wt. % of Ni oxide (Ni(CH)₂) and 50 wt.% of mixed powders in which CoOOH layers (3wt.%) are arranged in said Ni oxide. In said active materials, said nickel oxide contains about 2 wt. % (converted to Ni metal) of Co and about 4 wt.% of Zn in a solid-solution state and said CoOOH layers or thin film layers contain about 8 wt. % (converted to Co metal) of Pb in a solid-solution state in said Co oxide layers or contain about 10 wt.% of powders of PbO mixed in said thin film layers, and particle diameters of powder materials are 15 to 20*µ*m.

### (Example 5, Ln solid solution)

The Ni/MH battery of Example 5 was obtained as described in Example 1 with the exception that active material powders with thin film layers provided are used in which fine powders mainly composed of Co (OH)₂ are pressed on surfaces of core powders composed of 50 wt.% of Ni oxide (Ni (OH)₂) and 50 wt.% of mixed powders in which COCCH layers (3wt.%) are arranged in said Ni oxide. In said active materials, said nickel oxide contains about 2 wt.% (converted to Ni metal) of Co and about 4 wt.% of Zn in a solid-solution state and said CoOOH layers or thin film layers contain about 8 wt.% (converted to Co metal) of Ln in a solid-solution state in said Co oxide layers or contain about 10 wt.% of powders of oxide of said Ln mixed in said thin film layers, and particle diameters of powder materials are 15 to 20 *µ*m.

### (Example 6, Cr,Ag solid solution)

The Ni/MH battery of Example 6 was obtained as described in Example 1 with the exception that active material powders were used in which fine powders mainly composed of Co (OH) (about 2 wt.% with respect to the total amount) are pressed in surfaces of core powders composed of 50 wt. % of Ni oxide (Ni (OH)₂) powders and 50 wt. % of mixed powders, wherein CoOOH layers are provided with said Ni oxide. In said active material powders, whose particle diameters is 15 to 20 µm, said nickel oxide contains about 2 wt.% of Co and about 4 wt.% of Zn in a solid-solution state converted to Ni metal and said CoOOH layers or thin film layers contain about 8 wt.% of Cr₂O₃ converted to Co metal in a solid-solution state in said CoOOH oxide layers or contain about 3 wt.% of AgO powders in a mixed state with said thin film layers.

### (Example 7, Mn and Ag solid-solution in nickel oxide)

The Ni/MII battery of Example 7 was obtained as described in Example 1 with the exception that active material powders were used in which fine powders mainly composed of Co (OH)₂ (about 2 wt.% with respect to the total amount) are pressed in surfaces of core powders composed of 50 wt.% of Ni oxide (Ni (OH)₂) powders and 50 wt.% of mixed powders, wherein CoOOH layers are provided with said Ni oxide. In said active material powders, whose particle diameters is 15 to 2C *µ*m, said nickel oxide contains about 6 wt.% of Mn and about 2 wt.% of Ag in a solid-solution state converted to Ni metal and said CoOOH layers or thin film layers contain about 6 wt.% of Ti converted to metal of Co in a solid-solution state in said CoOOH oxide layers or contain about H wt.% of TiO₂ powders in a mixed state with said thin film layers. For information, in the growth process of crystals of solid dispersion of Mn and Ag, in order to form solid dispersion of Mn²⁺, they were grown with N₂ gas blown in.

### (Example 8, Mg and Al solid-solution in nickel oxide)

The Ni/MH battery of Example 8 was obtained as described in Example 1 with the exception that active material powders were used in which fine powders mainly composed of Co (OH)₂ (about 2 wt. % with respect to the total amount) are pressed in surfaces of core powders composed of 50 wt. % of Ni oxide (Ni (OH)₂) powders and 50 wt.% of mixed powders, wherein CoOOH layers are provided with said Ni oxide. In said active material powders, whose particle diameters is 15 to 20 µm, said nickel oxide contains about 6 wt.% of Mn and about 2 wt.% of Ag in a solid-solution state converted to Ni metal and said COOOH layers or thin film layers contain about 6 wt.% of Ti converted to Co metal in a solid-solution state in said CoOOH oxide layers or contain about 8 wt.% of TiO₂ powders in a mixed state with said thin film layers. For information, since Al is trivalent ion, crystal density thereof was enhanced by making pH 11.1 while solution with pH 11.3 was used.

### (Example 9, inclusion of Ni powders)

The Ni/MH battery of Example 9 was obtained as described in Example 1 with the exception that active material powders were used in which fine powders mainly composed of Co (OH) (about 2 wt.% with respect tc the total amount) are pressed in surfaces of core powders composed of 50 wt.% of Ni oxide (Ni (OH)₂) powders and 50 wt.% of mixed powders, wherein CcCCH layers are provided with said Ni oxide. In said active material, powders, whose particle diameters is 15 tc 20 *µ*m, said nickel oxide contains about 2 wt.% of Co and about 4 wt.% of Zn in a solid-solution state converted to Ni metal and about 3 wt.% cf nickel powder (1*µ*m) converted to Co metal was mixed in said Co oxide layers or said film layers. For information, the mixing of Ni. powders was conducted by making specific amount of Ni powders disperse in cobalt sulfate solution or by forming thin film layers pressing mixtures cf Co(OH)₂ powders and Ni powders in core powders.

### (Example 10, inclusion of Li oxide, Na oxide)

The Ni/MH battery of Example 10 was obtained as described in Example 2 with the exception that active material powders with particle diameter of 15 to 20 µm were used as materials. In said active material powders, Ti was solid-solved in Example 2 or Ti oxide in Example 2 was mixed and said powders were stirred in the air keeping temperature about 80°C. Then 10 parts by weight of 1 mol LiOH solution or NaOH solution was poured to 100 parts by weight of said powders keeping stirring for about 30 minutes, and then washed with water.

### (Comparative Example 1, Conventional Example)

The Ni/MH battery of Comparative Example 1 was obtained as described in Example 1 with the exception that instead of using active material paste used in Example 1, active material pastes were used which were obtained by the following steps.

100 parts by weight of spherical active material powders of nickel oxide with a diameter of about 10 µm in which about 2 wt.% of cobalt and about 4 wt.% of zinc were solid-solved to nickel hydroxide were mixed with 22 parts by weight of solution in which about 1 wt.% of carboxymethyl cellulose and about 0.1 wt.% of fine powders of polyolefin resin were dissolved in water, to prepare pastes, followed by further adding about 3 wt.% of cobalt oxide (CoO) and about 2 wt.% of zinc oxide (ZnO) thereby making active material paste.

### (Comparative Example 2, no metal solid-solved in CoOOH)

Alkali storage batteries of Comparative Example 2 were prepared as described in Example 1 with the exception that nickel oxide coated with cobalt oxide was used, wherein nickel oxide is coated with cobalt oxide and said cobalt oxide use materials which include no solid-solved metal, whereas said nickel oxide contains about 2 wt.% of Co converted to Ni metal and about 4 wt. of Zn converted to Ni metal 1 and about 8 wt.% of Ti converted to Ni metal in a solid-solution state and said cobalt oxide contains spherical active material powders whose diameter is about 15 µm when said cobalt oxide is contained in 6 wt. % with respect to nickel oxide in Example 1.

### (Evaluation)

Filling density of five electrodes in Examples 1 and 2 and the characteristics of AA size batteries (5 cells each) applying these are shown in Table 1. N-1 in the table means the evaluation result of electrodes in Example 1. and batteries using them and N-2 in the table means the evaluation result of electrodes in Example 2 and batteries using them. In addition, among battery characteristics, capacity density and intermediate voltage with 3C rate discharge were measured setting 3 cycles of charge and discharge as chemical conversion periods, and based on charge in fourth cycle : 0.1C × 120% at a temperature of 2.5 °C for charge, and 0.2C rate for discharge. In addition, cycle life was measured by repeating 1C × 100 % for charge and 1C × 80 % for discharge, and in every 50 cycle, battery capacity tests were conducted under the above measuring condition and the number of cycles was determined at the point where initial capacity gets less than 60%. Here, the characteristics obtained by a Comparative Example are shown represented by C-1 by which five electrodes and five cells of batteries were prepared using conventional Ni(OH)₂ powders and to the paste thereof, adding 4 wt. % of zinc oxide powders. Also, the characteristics obtained by another Comparative Example are shown represented by C-2 by which five electrodes and five cells of batteries were prepared arranging 6 wt.% layers (about 0.9 Å) in conventional Ni (OH)₂ powders, followed by blowing hol air with a temperature of 120 °C, thereby converting into CoOOH.

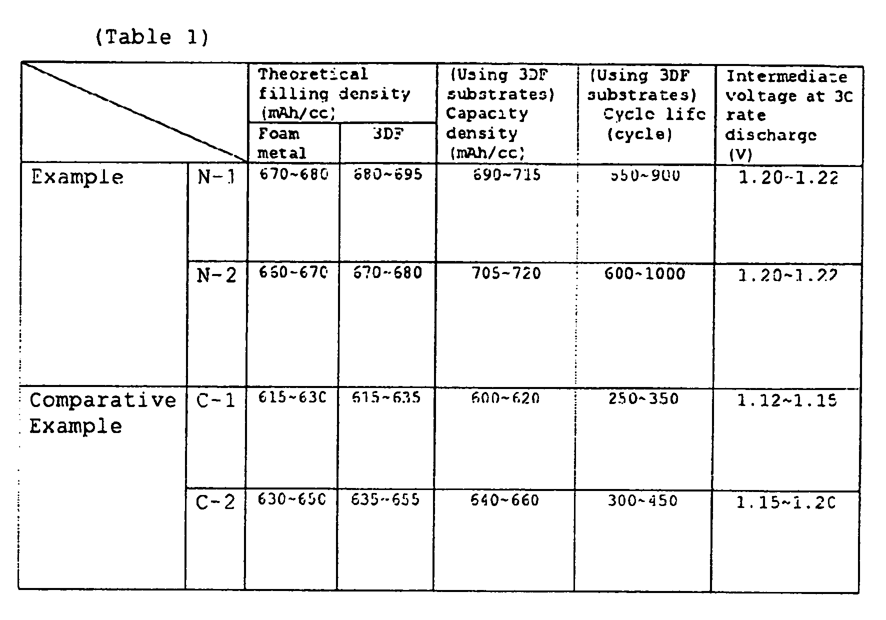

As a result, regardless of the kinds of substrates, positive electrodes of Examples 1 and 2 have large theoretical filling density since tapping density is high and no other additives are required. In addition, the actual capacities in AA-size battery characteristics are much larger than those in Comparative Examples. It is assumed that by the aforementioned reasons and with micro powder coatings of Co and/or Co oxide, a specific surface increases, and consequently, a contact area with electrolytes increases, which enhances the utility ratio of active materials. Also, improvement in cycle life is acknowledged and it is assumed that with more micropores provided in active material powders than conventional examples, micropores absorb swelling of active materials caused by repeated charge and discharge, which inhibits cracking of active materials. Further, the increase in a contact area with electrolytes was effective for improvement in discharging voltage with comparatively high discharging rate (3Crate discharge) as well.

### (Charging performances)

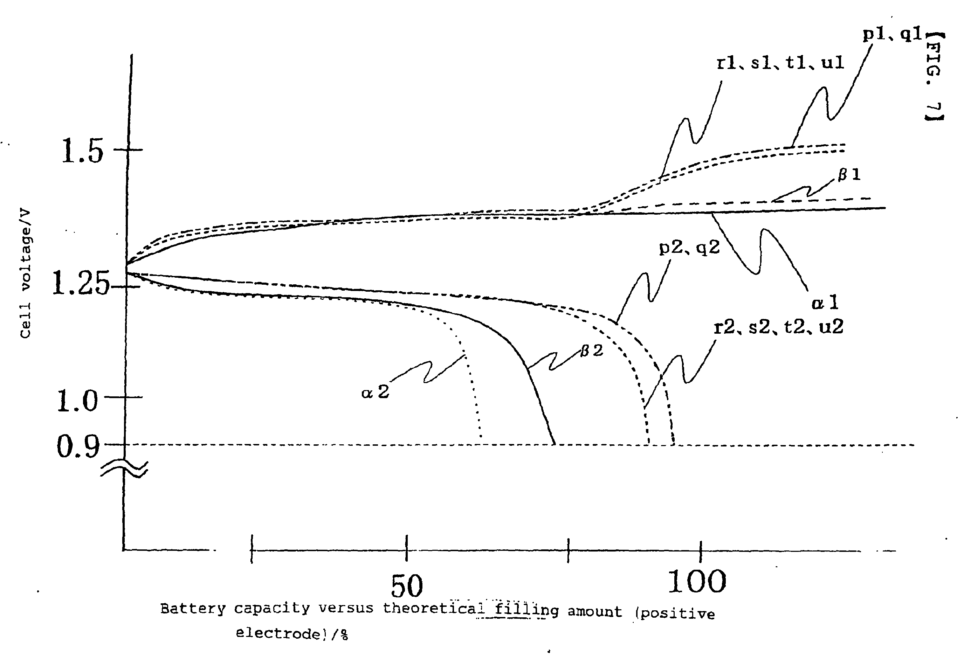

In Examples 1 to 6 and Comparative Examples 1 and 2, 10 alkali storage batteries of each Example and of the Comparative Example were charged at 45°C, 0.1C and 130%, kept 20°C for one hour, and then discharged at 20°C and 0.2C to 0. 9 V. The average values of the charging performances of each battery are illustrated in FIG. 7. The charging curves of the alkali storage batteries of Examples 1 to 6 are designated by the symbols of pl, ql, rl, sl, tl, and ul, respectively. For Comparative Examples 1 and 2, the symbols α1 and β1, respectively, are used in FIG. 7. As shown in FIG. 7, in batteries using active material powders with Ti, Y, Zn, Cd, Ca, Pb, Fe, Cr, Ag, Mo, and Ln arranged in the vicinity of surface layers based on positive active materials, as a result that oxygen evolution or voltage judged from double curves of charging curves under high temperature is improved, charging further progresses and discharge capacity is improved.

### (Discharging performances)

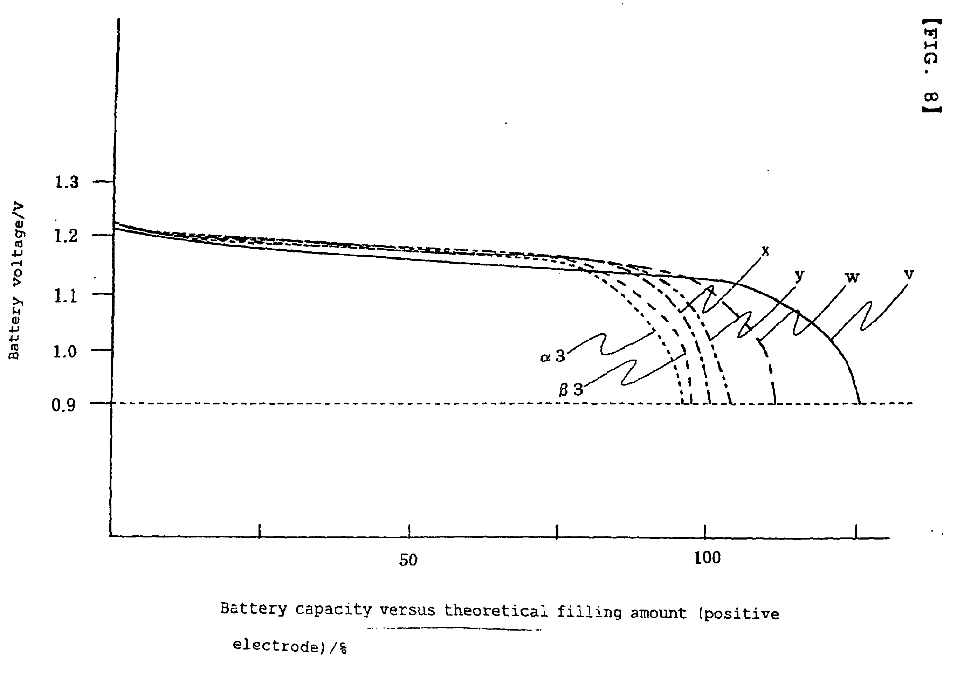

With Examples 7 to 10 and Comparative Examples 1 and 2, the average values of the discharging performances are shown in FIG. 7 when each was discharged under the above-described conditions. Under conditions close to the case of general, standard charge and discharge, i.e., under the conditions of charge and discharge at 20°C, 0. 1C and 130% and then of discharge at 20°C and 0.1C to 0.9 V, the discharging performances when 10 battery of Examples 7 to 10 and Comparative Examples 1 and 2 are, respectively, indicated by the symbols v, w, x, y, α3 and β3 in FIG. 8. As shown in FIG.8, batteries using active material powders in which elements represented by Co, Zn, Mn, Ag, Mg, and Al in Ni oxide (mainly Ni(OH)₂) are solid-solved is found to further improve discharge capacities.

### (Results)

The alkali storage batteries of Examples 2 to 6 can be charged at high voltages as compared with the alkali storage batteries of Comparative Examples 1 and 2, conventional examples that use an active material not having metals in the form of a solid solution contained in the cobalt oxide layer above the nickel oxide, at nearly 80% or higher in capacity relative to the theoretical filling amount, for charging performances as in FIG. 7. This seems to be because the oxygen evolution over voltage is improved due to elements melted in the form of the solid solution in the cobalt oxide layer. Also, the alkali storage batteries of Examples 7 to 10 exhibited discharge capacities higher than those of the alkali storage batteries of Comparative Examples 1 and 2 in discharging performances as well. The reason seems to be because the charging proceeds even at high temperatures. In other Words, alkali batteries of the present invention were excellent in charge acceptance property at high temperature and have high capacity in wide temperature range. In addition, as stated in the beginning of (evaluation) section, alkali storage batteries of the present invention have characteristics that supercede conventional batteries in view of cycle life characteristics and effective discharge characteristics. In particular, an active material prepared by melting Mn and Ag in nickel oxide in the form of a solid solution was slightly lower in discharging voltage, but has a discharge capacity near 125%; An active material containing Mg and Ag in the form of a solid solution was slightly lower in capacity as compared to the former, but showed a voltage similar to a conventional active material. The tern "theoretical capacity of 100%" stands for setting the one-electron reaction in which nickel oxide is changed from the trivalence to the divalence equal to 100% A Ni metal powder made to be contained in the cobalt oxide layer did not improve active material utilization as expected, but had the effect of improving variation; only impregnation of Li mainly with micropores of the cobalt oxide layer was capable of improving the utilization by about 3%.

### (Industrial applicability)

An alkali storage battery of the present invention suppresses the evolution of oxygen, thereby improving charging efficiency and battery capacity, and thus is suitable for electric sources of multi-functioned small electronic equipment, electric power tools and other devices, and movable power sources, i ,e., high power applications of electric vehicles (EVs), hybrid electric vehicles (HEVs), electric assisted bicycles and the like.

## Claims

1. An alkali storage battery using power generation elements composed of a positive electrode comprising nickel (Ni) oxide as main materials, a negative electrode, a separator and an alkali aqueous solution, wherein materials of said positive electrodes are
(a) spherical or elliptic powders whose tapping density is not less than 2.2 g /cc mainly composed cf nickel hydroxide(Ni(OH)₂),
(b) said powders comprise core powders with innumerable microscopic concaves and convexes on surfaces mainly composed of spherical or elliptic β-type Ni (OH)₂, and fine powders composed of metal cobalt (Co) and /or Co oxide, and said fine powders are crushed and pressed in substantially all concave portions of microscopic concaves and convexes of said core powders, thereby integrated with core powders, and surface layers of said powders are coated with said fine powders and are flattened, and
(c) said core powders and / or said fine powders have innumerable micro pores which penetrate from surfaces to inner portions.

2. An alkali storage battery as set forth in claim 1, wherein said core powders are mixtures of spherical or elliptic powders mainly composed of β-type Ni(OH)₂ and spherical or elliptic powders mainly composed of β-type Ni (OH)₂ with surface layers arranged mainly composed of cobalt oxide en surfaces.

3. An alkali storage battery as set forth in claim 1 or 2, wherein mixture ratio of spherical or elliptic powders mainly composed of *β*-type Ni (OH)₂ with surface layers arranged mainly conposed of cobalt oxide on surfaces is not less than 30 % hy weight.

4. An alkali storage battery as set forth in any of claims 1 to 3, wherein at Least one element selected the elements of cobalt (Co), zinc (Zn), manganese (Mg), and aluminum (Al) is solid-solved.

5. An alkali storage batter as sen forth in any of claims 1 to 4, wherein at least one element or one oxide of elements selected from the elements of titanium (Ti), yttrium (Y), zinc (Zn), cadmium (Cd), calcium (Ca), plumbum (Pb), iron (Fe), chrome (Cr), silver (Ag), molybdenum (Mo) and lanthanoid (Ln) (here, Ln is a mixture of one more elements classified as lanthanoid) is solved or admixed on surface layers of powders of said positive electrodes.

6. An alkali storage battery as set forth in any one of claims 1 to 5, wherein powders of said positive electrodes are crushed and pressed in most portions of substantially all concave portions of microscopic concaves and convexes of said core powders under the presence of said fine powders and alkali metals not greater than 0.1% by weight in an atmosphere at a room temperature.

7. An alkali storage battery as set forth in any one of claims 1 to 6, wherein fine powders of said positive electrodes are mixtures of cobalt oxide (CoO), cobalt hydroxide (Co (OH)₂) and cobalt oxyhydroxide (CoOOH).

8. An alkali storage battery as set forth in any one of claims 1 to 7, wherein a specific surface of powders of said positive electrodes is not less than 7 m²/g.

9. An alkali storage battery as set forth in any cne of claims 1 to 8, wherein said electrodes arc integrated to form electrodes in a way that together with binders, active material powders mainly composed of nickel oxide are coated on or filled in both sides of a substrate composed of a metal foil with innumerable concaves and convexes being prepared stereoscopic.

10. An alkali storage battery as set forth in Claim 9, wherein main materials of said negative electrodes are powders of metal hydride or mixed powders of cadmium (Cd) and cadmium oxide.

11. An alkali storage battery as set forth in claim 10, wherein as main materials of said negative electrodes , powders of at least one element or compounds of at least one element selected from carbon (C), nickel (Ni), cobalt (Co), titanium (Ti), zinc (Zn), yttrium (Y), chrome (Cr), and calcium (Ca) are mixed.

12. An alkali storage battery as set forth in any cne of claims 1 to 11, wherein said separator is a non-woven fabric composed of polyolefin-based synthetic fibers subjected to hydrophilic treatment.

13. An alkali storage battery as set forth in claim 12, wherein said hydrophilic treatment is conducted by combining sulfo group on surfaces of said synthetic fibers and sulfonation ratio (ratio of sulfur to carbon: S/C) is not less than 4× 10⁻³ and a porosity is 40 to 60 vol %.

14. An alkali storage battery as set forth in any one of claims 1 to 13, wherein said alkali electrolyte is mainly composed of potassium hydroxide (KOH) and includes sodium hydroxide (PdaOH) and / or lithium hydroxide (LiOH).

15. An alkali storage battery as set forth in claim 14, wherein specific gravity of said alkali electrolyte is 1.30 to 1.40.

16. An alkali storage battery as set forth in claims 1 to 15, wherein thickness of said positive electrode, negative electrode, and separator is 200 to 500 *µ*m, 100 to 300 *µ*m, and 50 to 110*µ*m, respectively.

17. A nickel electrode whose main reacting substance is nickel (Ni) oxide, wherein materials of said electrode are
(a) spherical or elliptic powders whose tapping density is not less than 2.2 q /cc mainly composed of nickel hydroxide (Ni(OH)₂),
(b) said powders comprise core powders with innumerable microscopic concaves and convexes on surfaces mainly composed of spherical or elliptic β-type Ni(OH)₂, and fine powders composed of metal cobalt (Co) and /or Co oxide, and said fine powders are crushed and pressed in substantially all concave portions of microscopic concaves and convexes of said core powders, thereby integrated with core powders, and surface layers of said powders a re coated with said fine powders and are flattened, and
(c) said core powders and / or said fine powders have innumerable micro pores which penetrate from surfaces to inner portions.
